# EUROPÄISCHE PATENTSCHRIFT

(11) **EP 0 635 665 B1**
(45) Veröffentlichungstag und Bekanntmachung des Hinweises auf die Patenterteilung: **12.03.1997**
(21) Anmeldenummer: 94109766.9
(22) Anmeldetag: 24.06.1994
(51) Int. Cl.: F16L 5/04, A62C 2/06

(54) **Vorrichtung zum Abschotten von durch Wände oder Decken hindurchführenden Rohren**
Device for the partition of pipes passing through walls or ceilings
Dispositif pour le cloisonnement de tuyaux traversant des parois ou des plafonds

(30) Priorität: 26.06.1993 DE 4321307; 29.10.1993 DE 4336964
(43) Veröffentlichungstag der Anmeldung: 25.01.1995
(73) Patentinhaber: FRIATEC AG KERAMIK- UND KUNSTSTOFFWERKE, D-68229 Mannheim (DE); STAUDT BRANDSCHUTZTECHNIK GmbH, D-74861 Neudenau (DE)
(72) Erfinder: Fischer, Heinz-Martin, Dr. rer. nat., D-72135 Dettenhausen (DE); Sohn, Martin, Dipl.-Ing. (FH), D-73732 Esslingen (DE); Züll, Armin, D-74177 Bad Friedrichshall (DE); Hesse, Horst, Dipl.-Ing., D-68229 Mannheim (DE); Schulze, Hans, D-68309 Edingen-Neckarhausen (DE)
(74) Vertreter: Müller, Hans, Dipl.-Ing.

(56) Entgegenhaltungen:
- EP-A- 0 506 497
- WO-A-88/04621
- DE-A- 4 113 375
- BAUPHYSIK, Bd.8, Nr.6, Dezember 1986, BERLIN, DE Seiten 165 - 170 E. KLEMENT ET AL. 'VERFÜLLUNG VON ROHRDURCHFÜHRUNGEN ZUR GEWÄHRLEISTUNG BRAND- UND SCHALLSCHUTZTECHNISCHER ANFORDERUNGEN'

## Beschreibung

### TECHNISCHES GEBIET

Die Erfindung betrifft eine Vorrichtung zum Abschotten von durch Wände oder Decken hindurchführenden Rohren gemäß dem Oberbegriff des Patentanspruchs 1. Diese Wände oder Decken stellen brandabschnittsbegrenzende Bauteile dar.

Aufgrund baurechtlicher Bestimmungen müssen größere Gebäude in Brandabschnitte unterteilt werden. Dabei besteht das Problem, daß Leitungen, Rohre und dergleichen durch diese Brandabschnitte hindurchgeführt werden müssen, so daß die einzelnen Brandabschnitte innerhalb eines Gebäudes über diese Leitungen oder Rohre miteinander verbunden sind. Öffnungen in den die Brandabschnitte begrenzenden Decken und Wänden sind aus Gründen des Brandschutzes aber unzulässig. Daher dürfen Leitungen, Rohre und dergleichen durch diese Wände und Decken nur hindurchgeführt werden, wenn gegen eine Brandübertragung durch diese Rohre hindurch besondere Vorkehrungen getroffen worden sind.

### STAND DER TECHNIK

Es ist eine Rohrabschottung in Form einer Rohrmanschette bekannt (siehe z.B. EP-A-0 506 497), die auf zumindest einer Wand- bzw. Deckenseite aufgebracht wird. Die Rohrmanschette ist auf ihrer Innenseite mit einem unter Hitzeeinwirkung sich nach innen ausdehnenden, feuerfesten Blähmaterial ausgekleidet. Im Brandfall wird durch das sich ausdehnende Blähmaterial das Rohr zusammengedrückt und so die Rohröffnung völlig verschlossen. Aufgrund der feuerfesten Eigenschaft des Blähmaterials ist damit eine Brandübertragung durch das Rohr hindurch nicht möglich. Bei Decken wird eine derartige Rohrmanschette auf der Deckenunterseite und bei Wanddurchbrüchen auf beiden Wandseiten, jeweils das Rohr umschließend, vorgesehen. Bei Decken kann auf der Deckenoberseite auf eine Abschottungsmanschette verzichtet werden, da ein Feuerübertritt von oben durch den Deckendurchbruch hindurch nach unten nicht möglich ist. Im Gegensatz dazu ist ein Brandübertritt durch einen Wanddurchbruch hindurch von beiden Seiten der Wand aus möglich.

### DARSTELLUNG DER ERFINDUNG

Ausgehend von diesem vorbekannten Stand der Technik liegt der Erfindung die Aufgabe zugrunde, eine verbesserte Rohrabschottung für brandabschnittsbegrenzende Bauteile anzugeben.

Diese Erfindung ist durch die Merkmale des Hauptanspruchs gegeben. Die Erfindung zeichnet sich bei der eine Rohrmanschette aufweisenden Rohrabschottung dadurch aus, daß ein schalldämmendes Material auf der Innenseite der Manschette vorhanden ist. Mit der Erfindung wird damit eine schalldämmende Rohrabschottung für brandabschnittsbegrenzende Bauteile geschaffen. Damit wird erreicht, daß die Übertragung von vorzugsweise Körperschall im Bereich der Rohrmanschette weitgehend ausgeschlossen bleibt. Dadurch können Schwingungen der Rohrwandungen, die z. B. durch haustechnische Anlagen wie Sanitärinstallationen oder Heizungs- und Klimaanlagen verursacht werden, als Körperschall nicht über die Rohrabschottung auf das Gebäude übertragen werden. Frühere Untersuchungen des Fraunhofer-Instituts für Bauphysik zeigen, daß bei Hauswassersystemen die erzeugte Körperschallanregung die gesamte Schallanregung eines Gebäudes beherrschen kann. Die schalldämmenden Eigenschaften eines beispielsweise schalldämmenden Rohres können somit an allen Stellen eines Gebäudes, und damit auch im Bereich von brandabschnittsbegrenzenden Wänden oder Decken zum Tragen kommen.

Aus Brandschutzanforderungen ist es erforderlich, daß eine Rohrabschottung nicht nur dicht gegen den Übertritt von Feuer sondern auch von Rauchgas sein muß. Nachdem das feuerfeste Blähmaterial, das außen an der Rohrwandung im Bereich der Manschette vorhanden ist, regelmäßig diese Rauchgasdichtigkeit aufweist, ist es sinnvoll, nur solches schalldämmende Material einzusetzen, das auch rauchgasdicht im Sinne dieser obigen Brandschutzanforderungen ist.

Das schalldämmende und/oder rauchgasdämmende Material der Rohrmanschette kann unmittelbar auf der Innenseite der Rohrmanschette oder auch auf der Innenseite des Blähmaterials angeordnet werden. Es ist nur wichtig, daß die dämmende Schicht zwischen der im allgemeinen metallischen Rohrmanschette und dem Rohrmantel des innerhalb der Manschette vorhandenen Rohres vorhanden ist.

Zum besseren Hantieren der Rohrmanschette hat es sich als günstig herausgestellt, das dämmende Material sowie das feuerfeste Blähmaterial so ausreichend fest innerhalb des Manschettenkörpers anzuordnen, daß diese Schichten beim Hantieren mit der Manschette nicht aus derselben herausfallen können.

Die dämmende Materialschicht kann als flächige Materialbahn vorhanden sein. Es ist allerdings auch möglich, lediglich dämmende Abstandshalter zwischen dem Rohr und der Manschette bzw. dem dämmenden Material anzuordnen und die Bereiche zwischen den Abstandshaltern als Luftschicht zu belassen. Welche dämmenden Materialien verwendet werden, hängt von der Güte der dämmenden Eigenschaften der Abschottungsmaßnahme ab. Erfahrungsgemäß wird an der Außenwandung des Rohres eine dicht anschließende, weich federnde Zwischenschicht als Dämmschicht angeordnet sein. Dadurch wird der direkte Kontakt von der Rohrleitung auf die Rohrabschottung und weiter auf die Decke oder die Wand vermieden; Luftschall-Nebenwegübertragungen über die zu verschließende, das Rohr umgebende Öffnung sind erschwert und sofern das dämmende Material auch rauchgasdämmend ist, ist auch die erforderliche Rauchgasdichtigkeit zwischen dem feuerfesten Blähmaterial und dem Rohr sichergestellt.

Die dämmenden Schichten können vollflächig oder über die Höhe des Rohres nur teilweise, beispielsweise gürtelartig vorhanden sein. Durch die gürtelartige Anordnung werden die Kontaktbereiche zwischen dem Rohr und der Manschette auf ein Minimum reduziert. Der "Gürtel" muß allerdings immer noch so mächtig sein, daß er eine ausreichend starke Sperre für Rauchgas im Brandfall darstellt. Als Dämmaterialien haben sich weichfederndes Material aus Glasvlies oder Schaumstoff als wirtschaftlich sinnvoll und technisch zufriedenstellend herausgestellt. Darüber hinaus ist es auch möglich, als gürtelartige Dämmstreifen vorkomprimierte, dauerelastische Fugen-Dichtbänder zu verwenden, die sich nach Lösung ihrer Komprimierung selbsttätig ausdehnen und so den Hohlraum zwischen Rohrwandung und Manschette ausfüllen. Durch geeignete Wahl des Dichtmaterials, dessen Dicke und Stärke der Vorkompression kann die jeweils erforderliche Dämmwirkung gezielt voreingestellt werden.

Um sicherzustellen, daß die dämmenden Eigenschaften und deren Rauchgasdichtigkeit nicht nur bei der Montage sondern auch danach bleibend vorhanden ist, ist eine zentrische Montage des Rohres in der Manschette erforderlich. Dies kann durch Verwendung von Distanzringen oder Abstandshaltern sichergestellt werden, die nach der Montage und dem Befestigen der Manschette an dem tragenden Bauteil wie der Decke oder der Wand wieder entfernt werden können.

Statt Dämmstreifen können auch Schlauch- oder Lippendichtungen aus weichem Gummimaterial oder Kunststoff zusätzlich oder alternativ verwendet werden.

Weitere Weiterbildungen dieser Rohrmanschette sind Gegenstand von Unteransprüchen.

Damit nicht nur im unmittelbaren Bereich der Rohrmanschette, sondern auch im Inneren des eigentlichen Wand- bzw. Deckendurchbruches eine Schallübertragung Rohr - Decke bzw. Rohr - Wand mit Sicherheit ausgeschlossen bleibt, hat es sich als vorteilhaft herausgestellt, auch in diesem unmittelbaren Durchbruchsbereich schalldämmende Maßnahmen vorzusehen. Ebenso wie bei der eigentlichen Rohrmanschette kann auch diese schalldämmende Maßnahme auf sehr einfache Weise durch eine Rohrhülse bzw. durch mehrere zusammenfügbare Rohrhülsenteile erreicht werden. Dabei ist jeweils auf der Innenseite der Hülse bzw. der einzelnen Hülsenteile das schalldämmende Material bzw. die schalldämmende Materialschicht angeordnet. Die Hülse kann nach einer Weiterbildung der Erfindung längs einer ihrer Mantellinien verschwenkt werden, so daß sie aufgeklappt um das abzuschottende Rohr herumgelegt und dann in den Durchbruchsbereich, längs des Rohres, verschoben werden kann.

Nach einer bevorzugten Ausführungsform der Erfindung kann ein derartiger Schutz gegen eine Übertragung von Körperschall im Bereich einer Decke, oberhalb der schalldämmenden Rohrmanschette, durch eine Schutzhaube verwirklicht werden, welche ein durch den Deckendurchbruch hindurchgeführtes Rohr im Bereich des Deckendurchbruches und gegebenenfalls auch noch in einem daran anschließenden Bereich oberhalb des Deckendurchbruches mit Abstand umgibt. Dadurch wird das Eindringen von Fremdkörpern in die Rohrmanschette hinein bzw. in den Bereich zwischen dem Rohr und dem Deckendurchbruch hinein verhindert. Diese Schutzhaube kann dabei gleichzeitig als Schallschutzhaube wirken, da sie im Abstand das Rohr umgibt. Eine direkte Körperschallübertragung zwischen den die Haube von außen umgebenden Deckenbereichen und dem Rohr ist nicht möglich. Zusätzlich kann auf der Innenseite der Schallschutzhaube eine schalldämmende Materialschicht vorgesehen werden. Die Schutzhaube stellt eine Schallschutzmaßnahme insbesondere im oberen Deckenbereich dar, so daß sie sinnvoll auch ohne eine schalldämmende Rohrabschottung verwendet werden kann.

Weiterbildungen und besondere Ausgestaltungen dieser Schallschutzhaube, auch im Zusammenhang mit einem durch Muffen verbundenen Rohrstoß innerhalb des Deckendurchbruches, sind Gegenstand von Unteransprüchen.

Nach einer weiteren wesentlichen Weiterbildung der Erfindung kann die außerhalb eines Durchbruches anzuordnende Rohrmanschette und die innerhalb des Durchbruches anzuordnende Manschette bzw. Hülse auch als einteilig miteinander verbundenes Bauteil ausgebildet werden. Diese Rohrabschottung kann dann beispielsweise mit entsprechenden Laschenteilen an der Unterseite einer Decke befestigt oder in den Durchbruch einbetoniert und dadurch in dem Durchbruch unverrückbar fest angeordnet werden. Die Rohrabschottung kann dabei längs eines geraden oder auch abgeschrägten Rohres vorgesehen werden.

Bei all diesen dämmenden Maßnahmen, die mit unterschiedlichsten Materialien verwirklicht werden können, muß sichergestellt sein, daß keine stark schallführenden Bauteile unmittelbare Verbindung mit dem abzuschottenden Rohr haben können.

Weitere Merkmale und Vorteile der erfindungsgemäßen Rohrabschottung sind den in den Ansprüchen weiterhin aufgeführten Merkmalen sowie den nachstehenden Ausführungsbeispielen zu entnehmen.

### KURZE BESCHREIBUNG DER ZEICHNUNG

Die Erfindung wird im folgenden anhand der in der Zeichnung dargestellten Ausführungsbeispiele näher beschrieben und erläutert. Es zeigen:
- Fig. 1: eine perspektivisch auseinandergezogene schematisierte Darstellung einer Rohrabschottung nach der Erfindung im Zusammenhang mit einem Deckendurchbruch, in dem das durchführende Rohr bereits vorhanden und befestigt ist,
- Fig. 2: eine Schnittdarstellung durch eine eingebaute Rohrabschottung entsprechend Fig. 1, mit einer zusätzlichen Manschette im unmittelbaren Deckendurchbruch,
- Fig. 3: eine Draufsicht auf eine halbe Rohrmanschette nach Fig. 1,
- Fig. 4: eine Schnittdarstellung durch eine Rohrabschottung entsprechend Fig. 1, im Zusammenhang mit einem Wanddurchbruch, mit einer zusätzlichen Manschette im unmittelbaren Wanddurchbruch,
- Fig. 5: eine Rohrmanschette nach der Erfindung im aufgeklappten Zustand für eine Rohrabschottung im unmittelbaren Bereich eines Decken- oder Wanddurchbruches,
- Fig. 6: eine Schnittdarstellung einer Rohrabschottung gemäß Fig. 5, im einbaufähigen Zustand,
- Fig. 7: eine Schnittdarstellung einer weiteren Ausführungsform für eine Rohrabschottung im Zusammenhang mit einem Deckendurchbruch, im eingebauten Zustand,
- Fig. 8, 9, 10: verschiedene Schnittdarstellungen der Rohrabschottung gemäß Fig. 7,
- Fig. 11: eine Schemadarstellung einer abgeknickten Rohrabschottung in einem Deckendurchbruch,
- Fig. 12: eine vergrößerte Darstellung der abgeknickten Rohrabschottung gemäß Fig. 11,
- Fig. 13: eine schematische perspektivische Darstellung einer Rohrabschottung mit Abstandshaltern im oberen Bereich einer Abschottung,
- Fig. 14: eine teilweise Schnittdarstellung einer Rohrabschottung mit Abstandshaltern im unteren Bereich einer Abschottung,
- Fig. 15: eine Schnittdarstellung durch eine aus Rohrmanschette mit aufgesetzter Schutzhaube bestehende Rohrabschottung im Zusammenhang mit einem Deckendurchbruch, und
- Fig. 16: eine Ansicht in Blickrichtung II gemäß Fig. 15.

### WEGE ZUR AUSFÜHRUNG DER ERFINDUNG

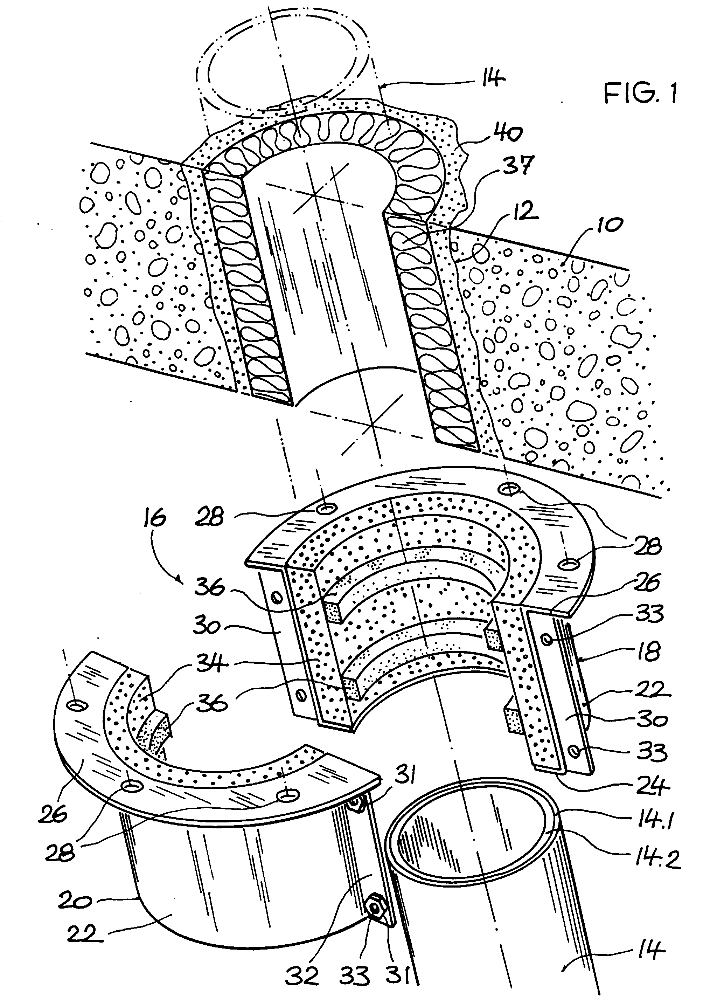

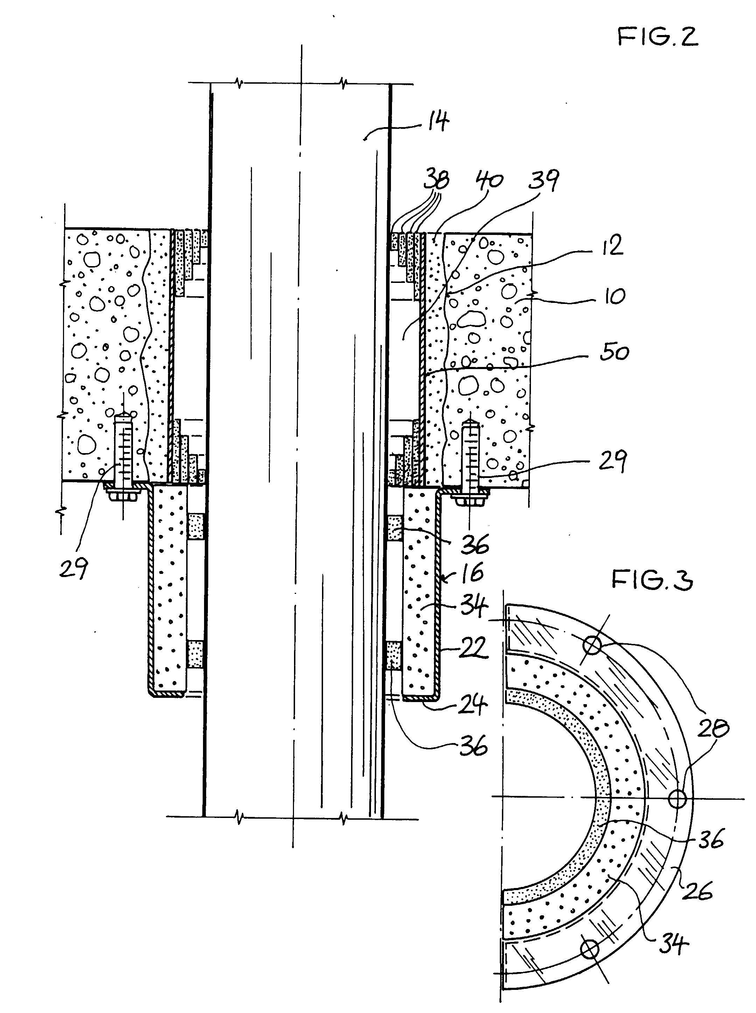

In Fig. 1 und 2 ist eine Decke 10 dargestellt, die ein abschnittsbegrenzendes Bauteil bildet. In dieser Decke 10 ist ein Durchbruch 12 vorhanden, durch den ein Rohr 14 hindurchgeführt und dort befestigt ist. Zur Brandabschottung und damit um zu verhindern, daß bei einem Brandfall Flammen durch den Durchbruch 12 bzw. das Rohr 14 aus dem Bereich unterhalb der Decke 10 in den Bereich oberhalb der Decke 10 hindurchtreten können, sind Abschottungsmaßnahmen vorgesehen. Diese Abschottungsmaßnahmen bestehen aus einer Rohrmanschette 16, die unterhalb der Decke 10 um das Rohr 14 herumgefügt und an der Decke befestigt wird.

Jede der die Rohrmanschette 16 bildenden beiden Rohrmanschettenhälften 18, 20 besteht aus einem im Querschnitt kreisabschnittsförmigen Mantel 22. Auf der unteren Stirnfläche des Mantels 22 ist eine nach innen verlaufende, kragenförmige Umbiegung 24 vorhanden. Auf der gegenüberliegenden, oberen Stirnseite besitzt der Mantel eine im vorliegenden Beispielsfall etwa um 90° nach außen hin abgewinkelte Umbiegung 26. In der oberen Umbiegung 26 sind Bohrungen 28 vorhanden, durch die hindurch die jeweilige Hälfte 18, 20 von unten her mittels Schrauben und Dübel 29 (Fig. 2) an der Decke 10 befestigt werden kann.

Zum Zusammenfügen der beiden Hälften 18, 20 besitzen deren beiden Mäntel 22 einen längs jeder Hälfte verlaufenden Mantelsteg 30, 32. Diese Stege besitzen übereinanderliegende Bohrungen 33, durch die hindurch die beiden Stege 30, 32 und damit die beiden Hälften 18, 20 fest miteinander verschraubt werden können. Zum problemlosen Anschrauben sind an jeweils einem Steg 32 bereits Muttern 31 hinter dem jeweiligen Durchbruch befestigt, wie z. B. angeschweißt.

Auf der Innenseite des Mantels 22 von jeder Hälfte 18, 20 ist ein Blähmaterial 34 vorhanden, das feuerfest ist und sich unter Hitzeeinwirkung ausdehnt. Auf der Innenseite wiederum von diesem Blähmaterial 34 ist ein schall- und rauchgashemmendes Material 36 vorhanden. Das Dämmaterial 36 ist nicht durchgehend sondern in zwei gürtelartigen Streifen oder Ringen vorhanden. Die Materialbahnen 34, 36 sind im vorliegenden Beispielsfall miteinander verheftet, so daß sie beim Hantieren mit den Manschettenhälften 18, 20 nicht wegfallen können. Außerdem haftet das Blähmaterial 34 an der Innenseite des Mantels 22 an. Von unten her ruhen beide Materialschichten 34, 36 auf der Abbiegung 24 des Mantels 22 auf. Dadurch ist ein ausreichend fester Sitz der beiden Materialschichten 34, 36 in dem jeweiligen Mantel 22 gewährleistet.

Die beiden Hälften 18, 20 werden mit den beiden innenliegenden Materialschichten 34, 36 um das Rohr 14 herumgefügt und durch die Bohrungen 33 hindurch miteinander verschraubt. Die dadurch gebildete Manschette 16 besitzt damit einen ausreichend festen Montagesitz an dem Rohr 14. Das Rohr 14 ist im vorliegenden Beispielsfall zweischichtig 14.1 und 14.2 als schalldämmendes Rohr ausgebildet.

Im Bereich des Deckendurchbruches 12 ist bei der Darstellung gemäß Fig. 1 das Rohr 14 mit einer schalldämmenden und gleichzeitig ausreichenden rauchgasdämmenden Materialschicht 37 umgeben. Zwischen dieser Dämmschicht 37 und dem Durchbruch 12 ist eine Vermörtelung 40 vorhanden. Das Rohr hat damit keinen unmittelbaren derartigen Kontakt mit der Decke 10, daß Körperschall in wesentlichem Maße übertragen werden könnte.

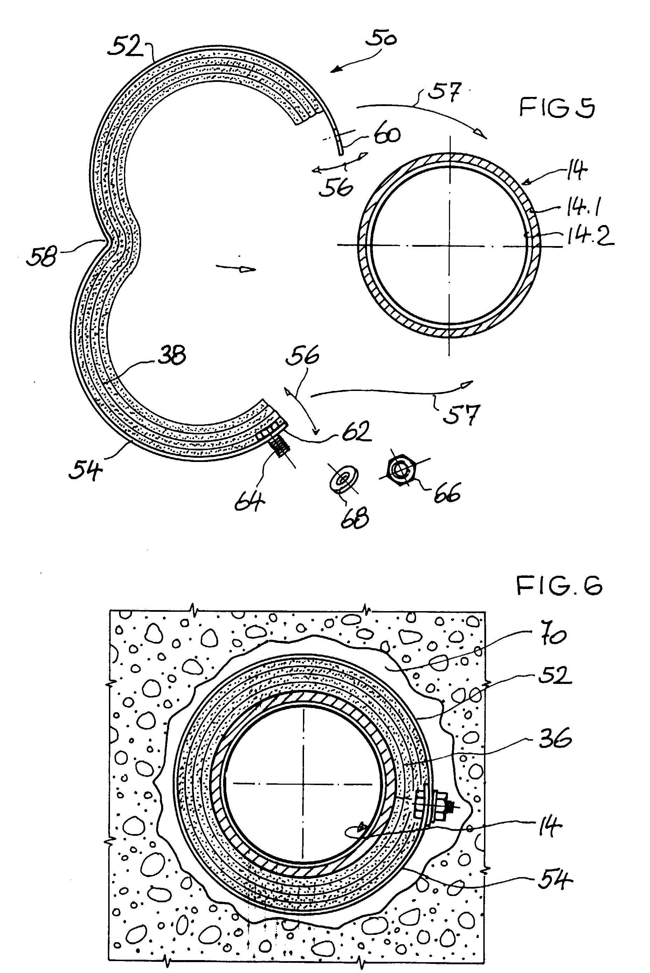

Demgegenüber ist bei der Fig. 2 eine schalldämmende Materialschicht 38 zwischen dem Rohr und der Vermörtelung 40 im Deckenbereich 10 nur teilweise vorhanden. Dies wird durch eine Rohrmanschette 50 ermöglicht, die im Zusammenhang mit den Figuren 5 und 6 unten noch näher beschrieben wird. Diese Manschette 50 kann zusätzlich zu der unterhalb des Durchbruches 12 vorhandenen Manschette 16 immer dann verwendet werden, wenn ein Rohr 14 nur durch den Durchbruch 12 hindurchgeführt, aber noch nicht in dem Durchbruch 12 eingemörtelt oder einbetoniert vorhanden ist.

Bei der Darstellung gemäß Fig. 2 sind auf der Innenseite der noch weiter unten beschriebenen Rohrmanschette 50 in ihrem oberen und unteren Endbereich jeweils mehrere unterschiedlich breite bzw. hohe Lagen 38 von schalldämmenden Materialschichten vorhanden. Die schmalste Schicht liegt auf dem Rohr 14 an, um eine möglichst kleinflächige Brücke zur Übertragung von Körperschall zu bilden. Der übrige Zwischenraum 39 zwischen Rohrmanschette 50 und Rohr 14 besteht im vorliegenden Beispielsfall aus Luft, so daß keine Körperschallübertragung stattfinden kann.

Nachdem die Vermörtelung 40 und die Rohrmanschette 50 mit dem Dämmaterial 38 in dem Durchbruch 12 vorhanden sind, wird die Rohrmanschette 16 mit ihren beiden Hälften 18, 20 von unten an der Decke 10 mittels der Dübel 29 befestigt. An dem Rohr 14 liegt dann im eingebauten Zustand im Bereich des Durchbruches 12 das Dämmaterial 38 und im Bereich der Rohrmanschette 16 das Dämmaterial 36 an (Fig.2,3). Durch diese schalldämmenden Schichten 36, 38 wird eine Übertragung von Körperschallwellen aus dem Rohr 14 in die Decke 10 hinein wirksam unterbunden.

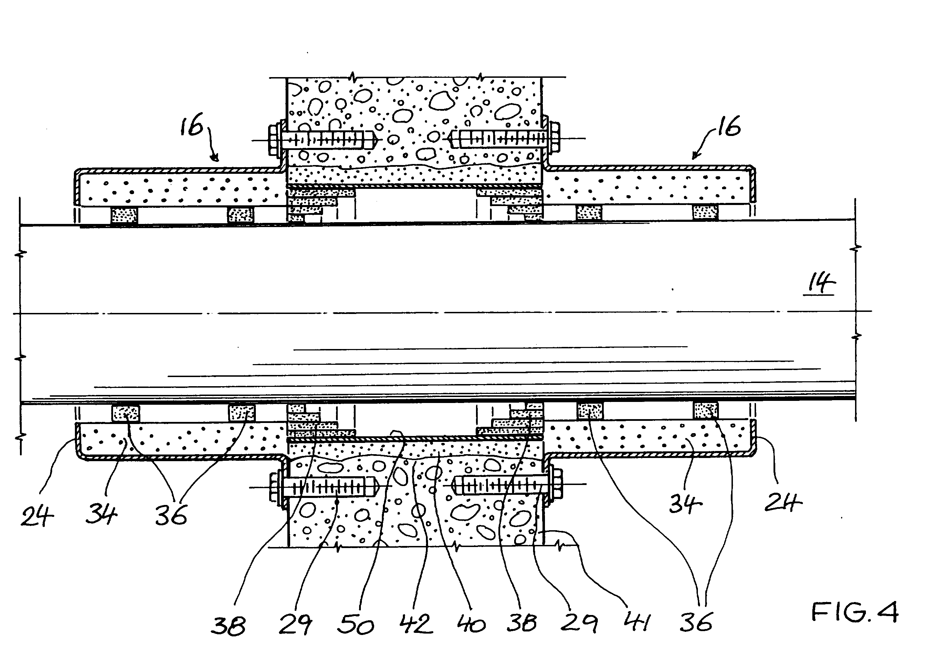

Während in den Fig. 1 und 2 eine Decke 10 als brandabschnittsbegrenzendes Bauteil vorhanden ist, ist in Fig. 4 eine Wand 41 als brandabschnittsbegrenzendes Bauteil vorhanden. Da bei einer Wand 41 von beiden Seiten aus ein Feuerübertritt durch ein in einem Durchbruch 42 der Wand 41 einsitzendes Rohr 14 hindurch möglich ist, sind auf beiden Seiten der Wand 41 jeweils eine Rohrmanschette 16 angeordnet. Im Bereich des Durchbruches 42 ist die gleiche schalldämmende Vorrichtung wie bei dem Durchbruch 12 der Decke 10 entsprechend Fig. 2 vorhanden. Auch bei der Darstellung gemäß Fig. 4 ist somit das Rohr 14 durchgehend im Bereich des Durchbruches 42 von einem schalldämmenden Material unmittelbar umgeben. Im vorliegenden Beispielsfall sind die beiden Manschetten 16 jeweils an beiden Seiten der Wand 41 angedübelt.' Es ist auch möglich, statt der Dübel einen durch die Wand 41 hindurchgehenden Bolzen zu verwenden, an den dann von beiden Seiten aus die beiden Manschetten 16 angeschraubt werden.

Durch die im Brandfall entstehende Hitze dehnt sich das feuerfeste Blähmaterial 34 aus. Diese Ausdehnung kann im wesentlichen nur nach innen, in Richtung auf das Rohr 14 hin, erfolgen, da eine Ausdehnung nach außen, von der Wand 41 bzw. der Decke 10 weg durch die außeren bzw. unteren Umbiegungen 24 verhindert wird. Dieses Ausdehnen führt dazu, daß das Rohr 14 so stark zusammengedrückt wird, daß ein Feuerdurchtritt durch das Rohr 14 oder durch die Umgebung des Rohres 14 und damit durch den Durchbruch 12 bzw. 42 hindurch nicht möglich ist. Bei dem Ausdehnen des Blahmaterials 34 wird die schalldämmende Materialschicht 36 mit nach innen hin verformt, was aber die abschottende Wirkung der Rohrmanschette 16 nicht beeinträchtigt.

Die in Fig. 5 und 6 dargestellte Rohrmanschette 50 besteht aus zwei Hülsenteilen 52, 54, die längs einer gemeinsamen Mantellinie 58 aneinander verschwenkbar (Doppelpfeil 56) aneinanderhängen. Auf der Innenseite der Hülsenteile 52, 54 ist die schalldämmende Materialschicht 38 angebracht. Diese Schicht 38 kann beispielsweise über eine Verklebung oder durch Aufrauhen der Innenseite der beispielsweise metallischen Hülsenteile 52, 54 ausreichend fest an den Hülsenteilen 52, 54 befestigt werden.

Im aufgeklappten Zustand wird die Rohrmanschette 50 um das durch einen Durchbruch 12 oder 42 hindurchführende Rohr 14 herumgelegt, so wie dies in Fig. 5 mit den Pfeilen 57 angedeutet wird. Dieses Umlegen um das Rohr 14 erfolgt vorzugsweise außerhalb des Durchbruches 12. Im umgelegten Zustand, wenn die beiden freien Enden 60, 62 über eine Verschraubung (Schraube 64, Mutter 66 mit Unterlegscheibe 68) miteinander verschraubt sind, wird die Rohrmanschette 50 dann in den Bereich des Durchbruches 12 bzw. 42, längs des Rohres 14, verschoben. Dieser Zustand ist in Fig. 6 dargestellt. Man erkennt, daß auch im Bereich des Durchbruches 12 bzw. 42 die Dämmaterialschicht 38 unmittelbar an dem Rohr 14 von außen anliegt. Der zwischen den Hülsenteilen 52, 54 und dem diese Teile 52, 54 umgebenden brandabschnittsbegrenzenden Bauteil (Decke 10 bzw. Wand 41) verbleibende Zwischenraum 70 wird durch eine Vermörtelung (beispielsweise 40 in Fig. 1, 2, 4) geschlossen. Gleichzeitig wird durch diese Vermörtelung auch erreicht, daß die Manschette 50 unverrückbar in dem Bereich des Durchbruches 12 bzw. 42 einsitzt. Sobald die Vermörtelung 40 ausreichend fest und damit ausgehärtet ist, wird beim Vorhandensein einer Decke 10 die Manschette 16 auf der Unterseite der Decke 10 angebracht, und bei dem Vorhandensein einer Wand 41 beidseitig der Wand 41 jeweils eine Manschette 16 befestigt.

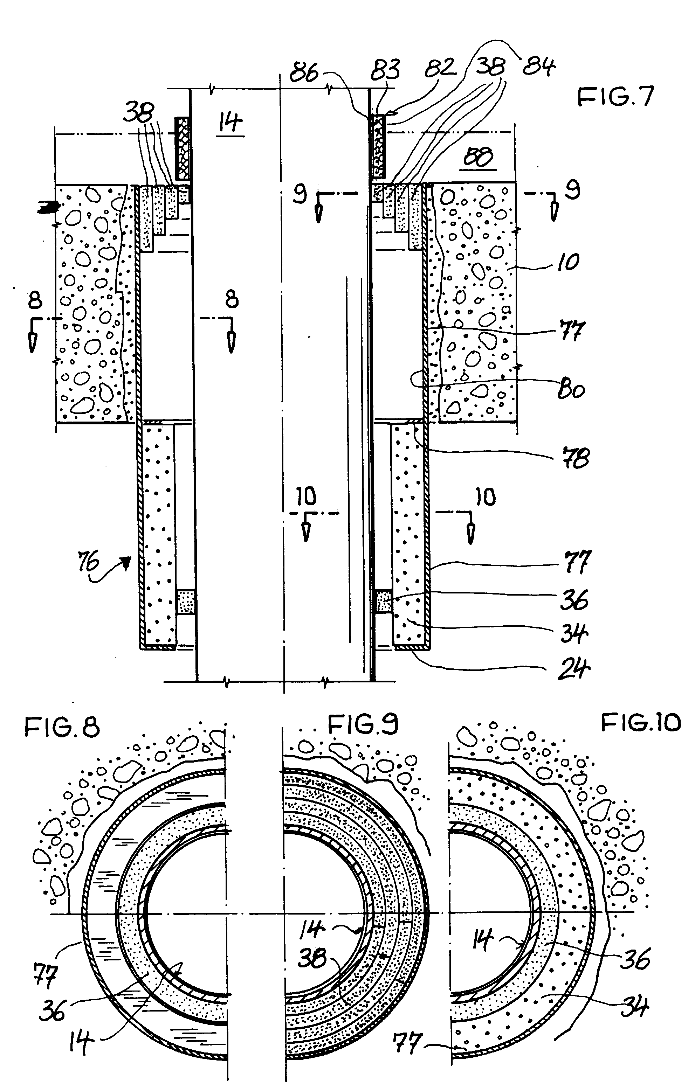

Die in den Fig. 7 bis 12 dargestellte Rohrabschottung basiert auf einer Rohrmanschette 76 bzw. 76.1, die ebenfalls bei einem Durchbruch 12 einer Decke 10 vorgesehen werden kann. Diese Rohrmanschette 76 bzw. 76.1 ist - zumindest teilweise - sowohl auf der Unterseite der Decke 10 als auch im Bereich des Durchbruches 12 vorhanden. Sie umfaßt wirkungsmäßig damit die in den Fig. 1 und 2 dargestellte Rohrmanschette 16 und die in dem Bereich des Durchbruches 12 bei den Fig. 1 und 2 vorhandene Manschette 50.

Im unteren Bereich, d. h. im wesentlichen außerhalb der Decke 10, besitzt die Rohrmanschette 76 (Fig. 7 bis 10) einen Mantel 77, der wie bei der Rohrmanschette 16 aus zwei oder mehreren Teilen bestehen kann. Auf der Innenseite des Mantels 77 ist wiederum das feuerfeste, sich unter Hitzeeinwirkung ausdehnende Blähmaterial 34 und nach innen hin weiter, als zweite Schicht, gürtelartig die schalldämmende Materialschicht 36 vorhanden. Nach unten hin wird die Schicht 34 durch eine Umbiegung 24 des Mantels 77 abgeschirmt. Nach oben hin ist ein umlaufender, sich nach innen erstreckender Kragen 78 an dem Mantel 77 vorhanden. Der Kragen 78 ist schmaler als die Umbiegung 24. Oberhalb des Kragens 78 setzt sich der Mantel 77 fort. In diesem oberhalb des Kragens 78 vorhandenen Bereich 80 ist auf der Innenseite des Mantels 77 die schalldämmende Schicht 38 vorhanden. Der Bereich 80 mit Schicht 38 entspricht damit der Manschette 50 mit oberer Schicht 38 (Fig. 2). Der Mantel 77 wird in den Durchbruch 12 eingesetzt und dabei um das Rohr 14 herumgelegt.

Über nicht näher dargestellte Maßnahmen wie beispielsweise mittels der Stege 30 (Fig. 1), können mehrere Manschettenteile bzw. Mantelteile 77 - gegebenenfalls nur unterhalb der Decke 10 - fest aneinandergeführt wie beispielsweise aneinandergeschraubt werden. Die um das Rohr 14 fest umgelegte Manschette 76 wird bis zum Kragen 78 in den Bereich des Durchbruches 12 hineingesteckt und durch nicht näher dargestellte Maßnahmen in dieser Position am Rohr 14 befestigt. Dies ist beispielsweise mit einer unterhalb der Manschette 76 angeordneten Montage-Rohrschelle möglich.

Im vorliegenden Beispielsfall ist oberhalb des Mantels 77 eine schalldämmende Bahn 82 um das Rohr 14 herumgewickelt. Diese bandagenartige Umwicklung 82 besteht aus einer Bahn, die eine schalldämmende Schicht 83 besitzt, auf deren Außenseite eine Alukaschierung 84 und auf deren Innenseite eine Klebe schicht 86 vorhanden ist. Die Bahn 82 klebt dadurch an dein Rohr 14 fest. Die Bahn 82 verhindert eine Körperschallübertragung von dem Rohr 14 auf einen Deckenbelag 88.

Die in Fig. 7 bis 10 dargestellte Rohrmanschette 76 könnte auch über außen angebrachte Flansche an der Unterseite der Decke 10 angeschraubt werden, ähnlich wie es beispielsweise mit der Rohrmanschette 16 in Fig. 2 dargestellt ist.

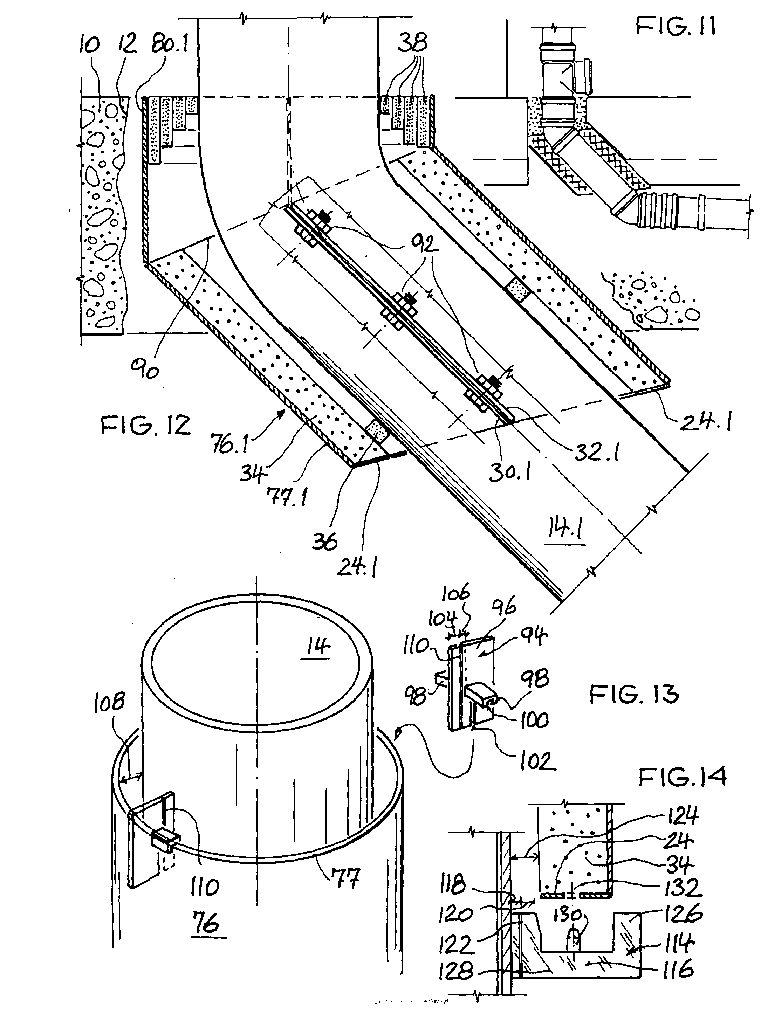

Die in Fig. 11 und 12 dargestellte Rohrmanschette 76.1 unterscheidet sich von der Rohrmanschette 76 im wesentlichen durch ihre abgeknickte Längserstreckung. In einem Durchbruch 12 einer Decke 10 ist im oberen Bereich ein dem Bereich 80 vergleichbarer Mantel 80.1 vorhanden. Im oberen Bereich desselben ist auf seiner Innenseite eine schalldämmende Schicht 38 vorhanden, die wie in den vorliegenden Fällen stufenartig abgetreppt, aus mehreren ringförmigen Lagen besteht. Längs einer schrägen ellipsenförmigen Kante 90 schließt sich nach schräg unten ein Mantel 77.1 an, der in seiner Ausgestaltung wirkungsmäßig dem Mantel 77 (Fig. 7) entspricht. Auf der Innenseite dieses Mantels 77.1 ist Blahmaterial 34 vorhanden. Im unteren Bereich dieses Blahmaterials 34, im Abstand zur unteren Umbiegung 24.1 des Mantels 77.1, ist eine gürtelartige Lage von schalldämmendem Material 36 vorhanden. Der Mantel 77.1 besteht wie auch der Mantel 77 aus zumindest zwei Manschettenhälften, so wie des systemmäßig für die Manschette 16 in Fig. 1 bereits dargestellt ist.

Über eine Verschraubung 92, die auf nach außen abgewinkelte Mantelstege 30.1, 32.1 des Mantels 77.1 einwirkt, wird die Manschette 76.1 zusammengehalten. Im Bereich 80.1 sind diese Stege 30.1, 32.1 nicht vorhanden, da dort eine Verschraubung im allgemeinen nicht vorgenommen zu werden braucht. Die Verschraubung ist nämlich im oberen Bereich dieses Durchbruches 12 aufgrund der abgeknickten Ausrichtung des Rohres 14.1 kaum von unten her zugänglich. Das Anbringen der Manschette sollte aber von nur einer Seite der Decke, beispielsweise von ihrer Unterseite her für eine Bedienperson möglich sein, soll die Manschette wirtschaftlich günstig eingesetzt und verwendet werden können.

Auf der Außenseite des Bereiches 80.1 ist in gleicher Weise wie bei dem Bereich 80 der Manschette 76 eine aufgerauhte Oberfläche vorhanden. Diese aufgerauhte Oberfläche ermöglicht ein besseres Halten der gesamten Manschette in dem Durchbruch 12.

Bei all den vorstehend genannten schalldämmenden Maßnahmen muß sichergestellt sein, daß das Rohr 14 genau zentrisch in der Manschette, beispielsweise 76, vorhanden ist. Da im allgemeinen das Rohr 14 bereits im Durchbruch vorhanden aber dort noch nicht befestigt ist, wird im Zusammenhang mit der Montage einer Manschette im allgemeinen mehr oder weniger heftig seitlich auf die Manschette 76 eingewirkt werden. Dadurch muß befürchtet werden, daß diese gewünschte mittige Anordnung der Manschette 76 bezüglich des Rohres 14 bis zum endgültigen Befestigen der Manschette 76 im Durchbruch 12 verloren geht. Dies kann durch Abstandhalter verhindert werden, die auf den oberen Rand der Manschette 76 (Fig. 13) oder auf den unteren Rand derselben (Fig. 14) angesetzt werden.

Die in Fig. 13 dargestellten Abstandshalter 94 besitzen seitlich von ihrem flächigen Plattenkörper 96 beidseitig wegstehende Stummelarme 98, die mit einer der Umrißgestalt des Mantels 77 der Manschette 76 krümmungsmäßig angepaßten Nut 100 versehen sind. Im Bereich des Körpers 96 ist die Nut Teil eines Schlitzes 102. Seitlich neben den Armen 98 ist ein Bereich 104 und 106 vorhanden. Beide Bereiche zusammen stellen den gewünschten Abstand zwischen dem Mantel 77 und dem Rohr 14 dar. Beispielsweise entspricht dieser Zwischenraum 108 der gemeinsamen Dicke der vorhandenen schalldämmenden vier Materialschichten 38. Damit auch andere beispielsweise kleinere Zwischenräume zwischen dem Bereich 80 einer Manschette 76 und dem Rohr 14 mit demselben Abstandshalter abgedeckt werden können, ist eine Längsnut 110 in der Platte 96 vorhanden, die die Bereiche 104, 106 voneinander trennt. Durch Abbrechen beispielsweise des Bereiches 104 könnte nur noch ein Zwischenraum "108" von der Breite des Bereiches 106 mit dem Rest-Abstandshalter 94 aufrechterhalten werden. Mit drei umfangsmäßig verteilt angeordneten Abstandshaltern 94 läßt sich eine exakt zentrische Anordnung des Rohres 14 innerhalb einer Manschette verwirklichen.

Mit einem Abstandshalter 114 kann der Abstand auch auf der Unterseite der Manschette zwischen derselben und einem Rohr 14 aufrechterhalten werden. Auch dort ist neben einem plattenartigen Körper 116 ein Bereich 118, 120 vorhanden, die beide über eine Sollbruchlinie 122 voneinander getrennt sind. Beide Bereiche zusammen ergeben den Abstand eines Zwischenraumes 124, der zwischen dem Blähmaterial 34 und dem Rohr 14 für den Gürtel 36 freibleiben soll. Der Körper 116 besitzt daher eine etwa U-förmige Gestalt, wobei der eine Schenkel aus den beiden Teilen 118, 120 und der andere Schenkel aus einem Wandstück 126 besteht, die über einen Steg 128 miteinander verbunden sind. An dem Steg 128 kragt ein Vorsprung 130 aus, der in eine Aussparung 132 rastbar eingeführt werden kann, die in der unteren Umbiegung 24 bzw. 24.1 vorhanden ist. Auf diese Weise kann der Abstandshalter 114 von unten auf den unteren Rand der Manschette 76 aufgesteckt werden. Durch Abbrechen beispielsweise des außeren Teils 118 kann ein kleinerer Zwischenraum als es dem Zwischenraum 124 entspricht, breitenmäßig aufrechterhalten werden.

Nachdem die Rohrmanschette 76 in dem Deckendurchbruch oder auch Wanddurchbruch, für den sich die Abstandshalter in gleicher Weise verwenden lassen, lagemäßig fest angeordnet ist, werden zwecks Verhindern von zusätzlichen Körperschallübertragungsbrücken die Abstandshalter wieder entfernt. Die Abstandshalter können dann wieder verwendet werden.

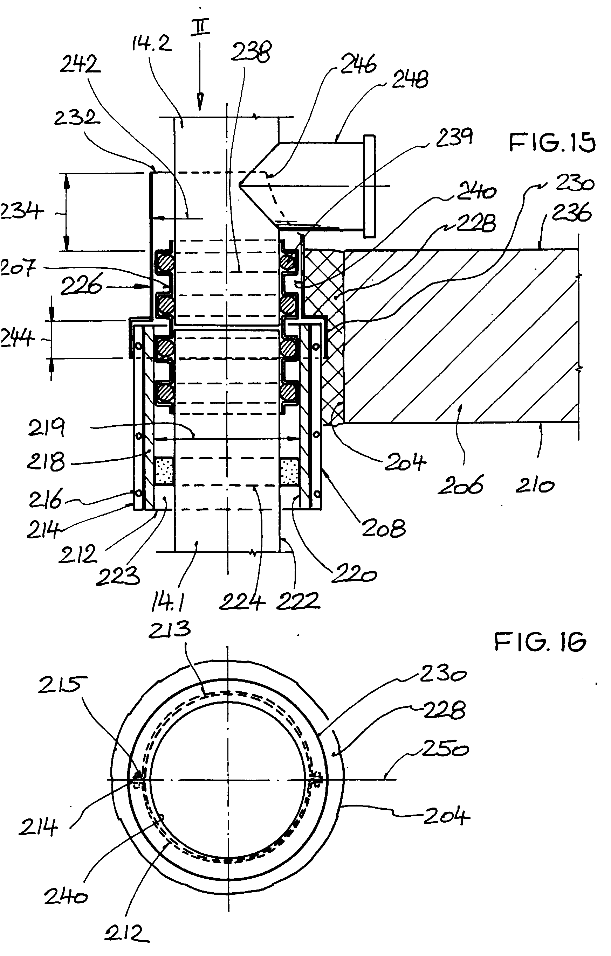

Bei der in Fig. 15 dargestellten Ausführungsvariante ist innerhalb eines Deckendurchbruches ein Stoß des hindurchgeführten Rohres 14.1, 14.2 vorhanden. Dieser Stoß ist über eine Doppelmuffe 207 verwirklicht. Von unten ragt in den Deckendurchbruch eine Rohrmanschette hinein, die innerhalb des Durchbruches endet. Diese Rohrmanschette könnte beispielsweise die in Fig. 2, 7, 11, 12 dargestellte Manschette sein. Im vorliegenden Fall ist die Rohrmanschette 208 aber nicht einteilig, sondern aus zwei Halbschalen 212, 213 zusammengesetzt, wie es beispielsweise für die vorstehend beschriebene Rohrmanschette 16 mit den Manschettenhälften 18, 20 grundsätzlich beschrieben ist. Der obere Rand der Rohrmanschette 208 wird von einer Schallschutzhaube 226 umfaßt, die nach oben hin durch den Durchbruch hindurchreicht und erst in einem gewissen Abstand oberhalb der Deckenoberkante endet, wie noch nachstehend näher beschrieben wird.

Fig. 15 zeigt schematisch die zwei Rohre 14.1, 14.2, welche durch eine Durchführung 204 (Durchbruch) einer Decke 206 eines Gebäudes hindurchgeführt und mittels einer Doppelmuffe 207 miteinander verbunden sind. Aus Gründen der vereinfachten Darstellung ist die Decke links der Rohre 14.1, 14.2 nicht weiter dargestellt. In der Durchführung 204 ist eine die Rohre 14.1, 14.2 sowie die Doppelmuffe 207 umgebende schutzeinrichtung in Form einer Rohrmanschette 208 angeordnet, welche teilweise bis unter die Unterkante 210 der Decke 206 reicht.

Die Rohrmanschette 208 besteht aus zwei im wesentlichen zylindrischen Halbschalen 212, 213, welche zur gegenseitigen Verbindung im wesentlichen in einer Axialebene liegende Flansche 214, 215 aufweisen. Die genannten Halbschalen bestehen aus Metall, sind mittels Schrauben 216 an den genannten Flanschen miteinander verbunden und enthalten auf ihrer Innenseite eine Schicht 218 aus Blähmaterial, das dem vorstehend beschriebenen Blähmaterial 34 entsprechen kann. Dieses Blähmaterial ist danach derart ausgebildet und angeordnet, daß im Falle eines Brandes und der hierbei entstehenden Hitzeeinwirkung es sich radial nach innen ausdehnt, das plastisch werdende Rohr 14.1 aus Kunststoff zusammendrückt und insgesamt die Durchführung absperrt. Zwischen der Innenfläche 220 der Schicht 218 und der Außenfläche 222 des Rohres 14.1, 14.2 ist bevorzugt ein definierter Ringspalt 223 mit einem vorgegebenen Abstand vorgesehen. In diesem Ringspalt 223 weist die Manschette 208 in zweckmäßiger Weise eine bevorzugt ringförmig angeordnete Schicht 224 aus schalldämmendem Material auf, wie bereits eingangs beschrieben ist. Diese hier nur schematisch angedeutete Schicht 224 verhindert die direkte perschallübertragung von den Rohren 14.1, 14.2 auf das Blähmaterial 218, ferner auf das Gehäuse bzw. die Halbschalen der Manschette und letztendlich auf die Decke 206.

Die Brandschutzeinrichtung 208 ist erfindungsgemäß mit der als Schallschutzhaube ausgebildeten Vorrichtung 226 kombiniert, welche eine Körperschallübertragung im Deckenbereich erheblich mindert. Mittels der Schallschutzhaube 226 wird gewährleistet, daß nach der Montage der Brandschutzeinrichtung 208, vor allem beim Ausgießen der Durchführung 204 mittels Mörtel oder Betonverguß 228, eine Körperschallbrücke zwischen dem Rohr 14 und der Decke 206 nicht entsteht. Die Vorrichtung 226 ist oben auf die Brandschutzeinrichtung 208 aufgesetzt, umgibt zumindest im Bereich der Decke 206 gleichfalls das Rohr 14.2 und übergreift mit einem erweiterten Bereich 230 die Brandschutzeinrichtung 208. Die Haube 226 ist in besonders zweckmäßiger Weise derart ausgebildet, daß ihr oberer Rand 232 in einem vorgegebenen Abstand 234 über die Oberkante 236 der Decke 206 vorsteht. Damit ist gewährleistet, daß nach dem Einbau der mit der Haube 226 kombinierten Manschette 208 praktisch keine Fremdkörper sich zwischen der Rohraußenfläche 222 und der Manschette 208 und/oder der Decke 206 festsetzen können.

Die beiden Rohre 14.1, 14.2 sind innerhalb der Haube 226 sowie der Manschette 208 mittels der Muffe 207 verbunden, welche hier als Doppelmuffe mit vier axial beabstandeten Sicken 238 ausgebildet ist. Im Inneren jeder Sicke befindet sich ein elastisches Element und/oder Dichtring 239, um einerseits die flüssigkeitsdichte Verbindung zu gewährleisten und andererseits eine Dämpfung von Körperschallschwingungen zu ermöglichen. Die Innenfläche 240 der Haube 226 weist einen Durchmesser 242 auf, welcher zumindest gleich oder größer ist als der Außendurchmesser der Sicken 238 der Muffe bzw. Doppelmuffe 207. Von besonderer Bedeutung ist, daß mittels den Dicht-ringen 239, welche aus Elastomer bestehen, eine Schallentkopplung zwischen den Rohren 14.1, 14.2 einerseits und der diese umgebenen Haube 226 und/oder der Manschette 208 erreicht wird. Die Muffe 207 bzw. deren Sicken 238 können somit an der Innenfläche 240 der Haube 226 sowie der Innenfläche 220 der Schicht 218 aus Dämmaterial anliegen, wobei gleichwohl eine hinreichende und den Anforderungen der Praxis entsprechende Entkopplung gewährleistet ist.

Innerhalb der Rohrmanschette 208 ist zusätzlich die schalldämmende Schicht 224 in Form von wenigstens einem Ring vorgesehen, um auch im unteren Bereich der Brandschutzeinrichtung 208 zuverlässig eine unmittelbare Anlage des Rohres 14 an der Innenfläche 220 zu verhindern. Es sei besonders darauf hingewiesen, daß der Innendurchmesser 242 der Innenfläche 240 der Schallschutzhaube 226 in zweckmäßiger Weise auf den Innendurchmesser 219 der schalldämmenden Schicht 224 abgestimmt ist und im wesentlichen gleich groß wie dieser ist. Im Rahmen der Erfindung sind die Innendurchmesser 219 und/oder 242 gleich oder größer als der Außendurchmesser der innerhalb der Haube 226 und/oder der Manschette 208 vorgesehenen Muffe 207, und zwar insbesondere deren Sicken 238. Somit ist eine vergleichsweise große axiale Toleranz für die tatsächliche Lage der Muffe bzw. der Verbindungsstelle der beiden Rohre 14.1, 14.2 in der Durchführung 204 der Decke 206 möglich. In der Zeichnung ist die praktisch symmetrische Lage der Doppelmuffe 207 zwischen der Unterkante 210 und der Oberkante 236 der Decke 206 dargestellt. Aufgrund der vorgeschlagenen Dimensionierung kann ersichtlich die Doppelmuffe 207 nach oben oder nach unten in einem vergleichsweise großen Bereich verschoben angeordnet sein, ohne daß hierdurch die Wirkungsweise der Brandschutzeinrichtung 208 zusammen mit der Schallschutzhaube 226 nachteilig beeinflußt würde.

Aufgrund des erweiterten Bereiches 230 sitzt die Haube 226 oben auf der Manschette 208 in definierter Weise auf, so daß keine zusätzlichen Arretierungs- oder sonstigen Montagemaßnahmen notwendig sind. Die Haube 226 überlappt die Manschette 208 axial in der Länge 244 des erweiterten Bereiches 230, welcher erfindungsgemäß als ein im Schnitt etwa L-förmiger Kragen ausgebildet ist. Die Länge 244 ist erfindungsgemäß vorgegeben und liegt in zweckmäßiger Weise im Bereich zwischen 2 bis 4 cm und ist bevorzugt im wesentlichen 3 cm groß. Hierdurch wird bei optimalem Materialeinsatz ein funktionssicherer Sitz der Schallschutzhaube 226 auf der Rohrmanschette 208 erreicht. Das Eindringen von Fremdkörpern, und zwar insbesondere des Betonverguß 228 beim endgültigen Verschließen der Durchführung 204 wird zuverlässig verhindert. Die Haube 226 ist oben mit einer Ausnehmung 246 für einen Anschlußstutzen 248 des Rohres 14.2 versehen.

Fig. 16 zeigt schematisch eine Ansicht von oben auf die Schallschutzhaube 226, mit ihrem erweiterten Bereich 230, wobei ferner noch die beiden Halbschalen 212, 213 der Rohrmanschette 208 schematisch angedeutet sind, das Rohr 14.2 aber nicht dargestellt ist. Die Schallschutzhaube 226 übergreift mit dem erweiterten Bereich 230 auch die Flansche 214, 215 der Halbschalen 212, 213. Ersichtlich ist der Innendurchmesser des erweiterten Bereiches 230 zumindest gleich, zweckmäßig größer als der maximale Außendurchmesser der Rohrmanschette 208, wobei in der hier dargestellten Ausführungsform der Innendurchmesser größer ist als der maximale Durchmesser der Rohrmanschette im Bereich der genannten Flansche 214, 215.

Anstelle der einteiligen Ausbildung der Schallschutzhaube 226 kann im Rahmen der Erfindung auch eine zwei- oder mehrteilige Ausführung vorgesehen sein. So kann die Schallschutzhaube entsprechend der Brandschutzmanschette aus zwei Halbschalen bestehen, wobei die Teilungsebene wiederum in einer Axialebene liegt. Zur Verbindung der einzelnen Teile wird in zweckmäßiger Weise ein Klebeband vorgesehen, welches eine problemlose Montage sicherstellt. Die zweckmäßig vorgesehene Teilungs- bzw. Verbindungsebene ist durch eine strichpunktierte Linie 250 angedeutet. Mittels des genannten Klebebandes erfolgt nicht nur die Sicherung der beiden Halbschalen, sondern vor allem auch die Abdichtung, so daß das Eindringen von Betonverguß beim Ausgießen der Deckendurchführung verhindert wird. In zweckmäßiger Weise werden die Übergänge zwischen der Schallschutzhaube 226, und zwar insbesondere zwischen deren erweiterten Bereich 230 und der Rohrmanschette 208 mittels Klebebändern vor dem Ausgießen abgedichtet. Ferner hat es sich als zweckmäßig erwiesen, im Falle einer Ausnehmung 246 oder dergleichen für einen Anschlußstutzen 248 des Rohres 14.2 zumindest dort den Übergangsbereich zwischen der Schallschutzhaube 226 und dem Rohr 14.2 und/oder dessen Anschlußstutzen 248 aus den genannten Gründen mittels eines Klebebandes oder dergleichen abzudichten.

## Patentansprüche

1. Vorrichtung zum Abschotten von durch Wände oder Decken hindurchführenden Rohren, mit
- mindestens einer an einer Wand bzw. Decke (10, 41) aufzubringender Rohrmanschette (16, 76), die auf ihrer Innenseite mit einem unter Hitzeeinwirkung nach innen ausdehnbaren, feuerfesten Blähmaterial (34) ausgekleidet ist,
**dadurch gekennzeichnet,** daß
- ein schalldämmendes Material (36, 38) auf der Innenseite der Manschette (16, 50, 76, 208) vorhanden ist.

2. Vorrichtung nach Anspruch 1,
**dadurch gekennzeichnet,** daß
das schalldämmende Material (36, 38) auch rauchgasdämmend ist.

3. Vorrichtung nach Anspruch 1 oder 2,
**dadurch gekennzeichnet,** daß
das dämmende Material (36, 38) auf der Innenseite des Blähmaterials (34) vorhanden ist.

4. Vorrichtung nach einem der vorstehenden Ansprüche,
**dadurch gekennzeichnet,** daß
das dämmende Material (36, 38) als Materialbahn vorhanden ist.

5. Vorrichtung nach einem der vorstehenden Ansprüche,
**dadurch gekennzeichnet,** daß
das dämmende Material ein weichfederndes Material aus Glasvlies und/oder Schaumstoff und/oder gummiartigem Stoff ist.

6. Vorrichtung nach einem der vorstehenden Ansprüche,
**dadurch gekennzeichnet**, daß
das schalldämmende Material als Schlauch- oder Lippendichtung ausgebildet ist.

7. Vorrichtung nach einem der vorstehenden Ansprüche,
**dadurch gekennzeichnet**, daß
das dämmende Material vorkomprimierte, dauerelastische FugenDichtbänder enthält, deren Vorkomprimierung aufhebbar ist.

8. Vorrichtung nach einem der vorstehenden Ansprüche,
**dadurch gekennzeichnet**, daß
das Blähmaterial (34) und das dämmende Material (36) aneinander befestigt wie vorzugsweise miteinander verheftet sind.

9. Vorrichtung nach einem der vorstehenden Ansprüche,
**dadurch gekennzeichnet**, daß
das dämmende Material (36, 38) in nicht eingebautem Zustand der Manschette (16) an der Manschette (16, 50, 76) unverrückbar festgehalten sind.

10. Vorrichtung nach einem der vorstehenden Ansprüche,
**dadurch gekennzeichnet**, daß
die Manschette (16, 76) aus mehreren Segmenten (18, 20) zusammensetzbar ist.

11. Vorrichtung nach Anspruch 10,
**dadurch gekennzeichnet**, daß
die Rohrmanschette (16, 76) bzw. zumindest eines ihrer Segmente (18, 20) aus einer Hülse bzw. aus einem Hülsenteil besteht, an deren bzw. dessen einer freien Stirnseite eine zumindest bereichsweise einspringende Schulter (24) vorhanden ist.

12. Vorrichtung nach Anspruch 10
**dadurch gekennzeichnet**, daß
die mehreren Segmente (18, 20) einer Manschette (16, 76) aneinander befestigbar (30, 33) sind.

13. Vorrichtung nach Anspruch 11
**dadurch gekennzeichnet**, daß
auf der Außenseite der Hülsenteile Stegteile (30, 32) so wegstehend vorhanden sind, daß mehrere Hülsenteile zu einem Hülsenkörper fest zusammensetzbar sind.

14. Vorrichtung nach Anspruch 13
**dadurch gekennzeichnet**, daß
Stegteile (30, 32) miteinander verschraubbar sind und auf der Außenseite von einem Stegteil (32) die zum Verschrauben vorgesehene zumindest eine Mutter (31) bereits angepunktet oder dergleichen befestigt ist.

15. Vorrichtung nach Anspruch 11
**dadurch gekennzeichnet**, daß
an der anderen freien Stirnseite der Hülse bzw. des Hülsenteils zumindest bereichsweise eine ausspringende Schulter (26) vorhanden ist, mittels der diese Hülse bzw. dieses Hülsenteil an der abzuschottenden Wand (41) bzw. Decke (10) befestigbar (29) ist.

16. Vorrichtung nach einem der vorstehenden Ansprüche,
**dadurch gekennzeichnet**, daß
im Bereich des Wand- bzw. Deckendurchbruches (12, 42) eine schalldämmende Materialschicht (38, 83) auf der Außenseite des durch diesen Durchbruch hindurchführenden Rohres (14) vorhanden ist.

17. Vorrichtung nach Anspruch 16,
**dadurch gekennzeichnet**, daß
diese schalldämmende Materialschicht (38) zumindest teilweise auf der Innenseite einer manschettenartigen Hülse (50, 52, 54) vorhanden ist.

18. Vorrichtung nach Anspruch 17,
**dadurch gekennzeichnet**, daß
diese schalldämmende Materialschicht (38) zumindest teilweise gürtelartig vorhanden ist.

19. Vorrichtung nach Anspruch 17,
**dadurch gekennzeichnet**, daß
diese Hülse (50. 52, 54) längs einer ihrer Mantellinien (58) verschwenkbar (56) ausgebildet ist, so daß sie im aufgeklappten Zustand um das durch den Durchbruch hindurchführende Rohr (14) herumlegbar ist.

20. Vorrichtung nach einem der vorstehenden Ansprüche,
**dadurch gekennzeichnet**, daß
eine außerhalb des Wand- bzw. Deckendurchbruchs anzuordnende Rohrmanschette (77) bzw. deren Segmentteile und eine innerhalb des Durchbruches anzuordnende manschettenartige Hülse (80) bzw. Hülsenteile aneinander befestigbar oder einteilig miteinander verbunden (76) sind.

21. Vorrichtung nach Anspruch 20,
**dadurch gekennzeichnet**, daß
zwischen der Rohrmanschette und der manschettenartigen Hülse eine nach innen zumindest bereichsweise einkragende Schulter (78) vorhanden ist.

22. Vorrichtung nach Anspruch 21,
**dadurch gekennzeichnet**, daß
diese einkragende Schulter (78) in Höhe der Wandaußenseite bzw. Deckenunterseite vorhanden ist.

23. Vorrichtung nach Anspruch 20,
**dadurch gekennzeichnet**, daß
bei einem Deckendurchbruch mit abgeknickter Rohrdurchführung, der Stoßbereich von Manschette und manschettenartiger Hülse im Bereich des Durchbruches vorhanden ist.

24. Vorrichtung nach Anspruch 23,
**dadurch gekennzeichnet**, daß
die Manschette und die manschettenartige Hülse im Bereich ihres Stoßbereiches schräg aneinander befestigt sind.

25. Vorrichtung nach einem der vorstehenden Ansprüche,
**dadurch gekennzeichnet**, daß
die Außenseite der mit Wand- bzw. Deckenteile in Berührung kommenden Manschettenbereiche aufgerauht oder an Beton und/oder Mörtel haftend ausgebildet sind.

26. Vorrichtung nach einem der vorstehenden Ansprüche,
**dadurch gekennzeichnet**, daß
Abstandhalter (94, 114) lösbar an der freien Stirnseite der Manschette bzw. der manschettenartigen Hülse anbringbar sind, so daß der durch das schalldämmende Material (36, 38) bedingte vergrößerte Abstand zwischen Rohr und Manschette unverrückbar festlegbar ist.

27. Vorrichtung nach Anspruch 26,
**dadurch gekennzeichnet**,
Sollbruchstellen (110, 122) an dem Abstandhalter (94, 114) so vorhanden sind, daß unterschiedlich große Freiräume zwischen Rohr und Manschette festlegbar sind.

28. Vorrichtung nach einem der vorstehenden Ansprüche,
**dadurch gekennzeichnet**, daß
das von der Rohrmanschette (16, 50, 76) umfaßte Rohr (14) ein schalldämmendes Rohr ist.

29. Vorrichtung nach Anspruch 28,
**dadurch gekennzeichnet,** daß
das schalldämmende Rohr einen zweilagigen Rohrmantel (14.1, 14.2) besitzt.

30. Vorrichtung nach einem der vorstehenden Ansprüche,
**dadurch gekennzeichnet,** daß
im Bereich eines Deckendurchbruches (204), oberhalb einer Manschette (208) eine insbesondere als Schallschutzhaube (226) ausgebildete Schutzhaube vorgesehen ist, welche ein durch den Durchbruch (204) hindurchgeführtes Rohr (14, 14.1, 14.2) zumindest im Bereich des Durchbruches (204) umgibt.

31. Vorrichtung nach Anspruch 30,
**dadurch gekennzeichnet,** daß
innerhalb der Manschette (208) und/oder der Schallschutzhaube (226) zur Verbindung zweier Rohre (14.1, 14.2) eine Muffe (207) vorgesehen ist, welche bevorzugt als Doppelmuffe ausgebildet ist.

32. Vorrichtung nach Anspruch 31,
**dadurch gekennzeichnet,** daß
die Muffe (207) wenigstens zwei Sicken (238) und bei Ausbildung als Doppelmuffe wenigstens vier Sicken (238) enthält, wobei in der jeweiligen Sicke (238) ein Ring (239) aus elastischem Material derart angeordnet ist, daß eine unmittelbare Berührung zwischen dem Rohr (14.1, 14.2) und Muffe (207) unterbunden ist.

33. Vorrichtung nach einem der Ansprüche 31 bis 32,
**dadurch gekennzeichnet,** daß
die Manschette (208) eine Schicht (218) aus blähbarem Material aufweist, deren Innendurchmesser (219) gleich oder größer ist als der Außendurchmesser der Muffe (207) und/oder deren Sicke (238).

34. Vorrichtung nach einem der Ansprüche 31 bis 33,
**dadurch gekennzeichnet**, daß
der Innendurchmesser (242) der Schallschutzhaube (226) wenigstens gleich oder größer als der Außendurchmesser der Muffe (207) und/oder deren Sicke (238) ist.

35. Vorrichtung nach einem der Ansprüche 33 bis 34,
**dadurch gekennzeichnet**, daß
der Innendurchmesser (242) der Schallschutzhaube (226) im wesentlichen gleich groß ist wie der Innendurchmesser (219) der Schicht (218) aus Blahmaterial der Manschette (208).

36. Vorrichtung nach einem der Ansprüche 30 bis 35,
**dadurch gekennzeichnet**, daß
die Schallschutzhaube (226) an ihrem der Manschette (208) abgewandten Ende einen insbesondere oberen Rand (232) aufweist, welcher zu einer Oberkante (236) der Decke (206) einen vorgegebenen Abstand (234) aufweist.

37. Vorrichtung nach einem der Ansprüche 30 bis 36,
**dadurch gekennzeichnet**, daß
die im Anschluß an die Manschette (208) vorgesehene Schallschutzhaube (226) in einem vorgegebenen, bevorzugt erweiterten Bereich (230) die Manschette (208) überlappt, wobei dieser Bereich (230) insbesondere als ein im Querschnitt im wesentlichen L-förmiger Kragen ausgebildet ist.

38. Vorrichtung nach Anspruch 37,
**dadurch gekennzeichnet**, daß
der Bereich (230) im Vergleich mit dem übrigen Teil der Schallschutzhaube (226) erweitert ausgebildet ist und/ oder in einer vorgegebenen Länge (244), die Manschette (208) übergreift.

39. Vorrichtung nach Anspruch 38,
**dadurch gekennzeichnet,** daß
die Länge (244) zwischen 2 cm und 4 cm groß ist und bevorzugt im wesentlichen 3 cm beträgt.

40. Vorrichtung nach einem der Ansprüche 30 bis 39,
**dadurch gekennzeichnet,** daß
die Schallschutzhaube (226) aus wenigstens zwei Teilen zusammengesetzt ist, welche insbesondere mittels eines Klebebandes oder mittels einer Klebeverbindung miteinander verbunden sind.

## Claims

1. Device for the partitioning-off of pipes leading through walls or ceilings, with
- at least one pipe sleeve (16, 76) which is to be applied to a wall or ceiling (10, 41) and which is lined on its inside with a refractory swelling material (34) expandable inwards under the effect of heat,
characterized in that
- a soundproofing material (36, 38) is present on the inside of the sleeve (16, 50, 76, 208).

2. Device according to Claim 1, characterized in that the soundproofing material (36, 38) is also proof against smoke gas.

3. Device according to Claim 1 or 2, characterized in that the proofing material (36, 38) is present on the inside of the swelling material (34).

4. Device according to one of the preceding claims, characterized in that the proofing material (36, 38) is present as a material sheet.

5. Device according to one of the preceding claims, characterized in that the proofing material is a softly resilient material consisting of glass-fibre matting and/or foam and/or rubber-like material.

6. Device according to one of the preceding claims, characterized in that the soundproofing material is designed as a hose or lip gasket.

7. Device according to one of the preceding claims, characterized in that the proofing material contains precompressed, permanently elastic joint-sealing tapes, the precompression of which can be cancelled.

8. Device according to one of the preceding claims, characterized in that the swelling material (34) and the proofing material (36) are fastened to one another, preferably stitched to one another.

9. Device according to one of the preceding claims, characterized in that, in the non-installed state of the sleeve (16), the proofing material (36, 38) is firmly held immovably on the sleeve (16, 50, 76).

10. Device according to one of the preceding claims, characterized in that the sleeve (16, 76) can be composed of a plurality of segments *(18,* 20).

11. Device according to Claim 10, characterized in that the pipe sleeve (16, 76) or at least one of its segments (18, 20) consists of a jacket or of a jacket part, on one free end face of which a shoulder (24) reentering at least in regions is present.

12. Device according to Claim 10, characterized in that the plurality of segments (18, 20) of a sleeve (16, 76) can be fastened (30, 33) to one another.

13. Device according to Claim 11, characterized in that web parts (30, 32) project from the outside of the jacket parts in such a way that a plurality of jacket parts can be assembled together firmly to form a jacket body.

14. Device according to Claim 13, characterized in that web parts (30, 32) can be screwed to one another and the at least one nut (31) provided for the screw connection is already spot-welded or similarly fastened to the outside of one web part (32).

15. Device according to Claim 11, characterized in that, on the other free end face of the jacket or of the jacket part, there is, at least in regions, a projecting shoulder (26), by means of which this jacket or this jacket part can be fastened (29) to the wall (41) or ceiling (10) to be partitioned off.

16. Device according to one of the preceding claims, characterized in that, in the region of the wall perforation or ceiling perforation (12, 42), a soundproofing material layer (38, 83) is present on the outside of the pipe (14) leading through this perforation.

17. Device according to Claim 16, characterized in that this soundproofing material layer (38) is present at least partially on the inside of a sleeve-like jacket (50, 52, 54).

18. Device according to Claim 17, characterized in that this soundproofing material layer (38) is at least partially girdle-like.

19. Device according to Claim 17, characterized in that this jacket (50, 52, 54) is designed to be pivotable (56) along one of its generatrices (58), so that, in the swung-open state, it can be laid around the pipe (14) leading through the perforation.

20. Device according to one of the preceding claims, characterized in that a pipe sleeve (77) or its segment parts, to be arranged outside the wall perforation or ceiling perforation, and a sleeve-like jacket (80) or jacket parts, to be arranged inside the perforation, can be fastened to one another or are integrally connected (76) to one another.

21. Device according to Claim 20, characterized in that a shoulder (78) projecting inwards at least in regions is present between the pipe sleeve and the sleeve-like jacket.

22. Device according to Claim 21, characterized in that this inwardly projecting shoulder (78) is level with the wall outside or ceiling underside.

23. Device according to Claim 20, characterized in that, in the case of a ceiling perforation with a bent pipe duct, the joint region of the sleeve and sleeve-like jacket is present in the region of the perforation.

24. Device according to Claim 23, characterized in that the sleeve and the sleeve-like jacket are fastened obliquely to one another in the region of their joint region.

25. Device according to one of the preceding claims, characterized in that the outside of the sleeve regions coming into contact with wall or ceiling parts are roughened or are designed to adhere to concrete and/or pug.

26. Device according to one of the preceding claims, characterized in that spacers (94, 114) can be attached releasably to the free end face of the sleeve or of the sleeve-like jacket, so that the increased distance between the pipe and sleeve caused by the soundproofing material (36, 38) can be fixed immovably.

27. Device according to Claim 26, characterized in that predetermined breaking points (110, 122) are present on the spacer (94, 114), in such a way that free spaces of differing sizes can be fixed between the pipe and sleeve.

28. Device according to one of the preceding claims, characterized in that the pipe (14) surrounded by the pipe sleeve (16, 50, 76) is a soundproofing pipe.

29. Device according to Claim 28, characterized in that the soundproofing pipe possesses a two-layer pipe casing (14.1, 14.2).

30. Device according to one of the preceding claims, characterized in that there is provided in the region of a ceiling perforation (204), above a sleeve (208), a protective hood which is designed, in particular, as a sound protection hood (226) and which surrounds, at least in the region of the perforation (204), a pipe (14, 14.1, 14.2) led through the perforation (204).

31. Device according to Claim 30, characterized in that a socket (207), which is preferably designed as a double socket, is provided within the sleeve (208) and/or the sound protection hood (226) for the connection of two pipes (14.1, 14.2).

32. Device according to Claim 31, characterized in that the socket (207) contains at least two beads (238) and, if designed as a double socket, at least four beads (238), a ring (239) consisting of elastic material being arranged in the respective bead (238) in such a way that direct contact between the pipe (14.1, 14.2) and the socket (207) is prevented.

33. Device according to one of Claims 31 and 32, characterized in that the sleeve (208) has a layer (218) of swellable material, the inside diameter (219) of which is equal to or greater than the outside diameter of the socket (207) and/or its bead (238).

34. Device according to one of Claims 31 to 33, characterized in that the inside diameter (242) of the sound protection hood (226) is at least equal to or greater than the outside diameter of the socket (207) and/or its bead (238).

35. Device according to one of Claims 33 and 34, characterized in that the inside diameter (242) of the sound protection hood (226) is essentially equal to the inside diameter (219) of the layer (218) of swelling material of the sleeve (208).

36. Device according to one of Claims 30 to 35, characterized in that the sound protection hood (226) has, at its end facing away from the sleeve (208), in particular an upper edge (232) which is at a predetermined distance (234) from an upper edge (236) of the ceiling (206).

37. Device according to one of Claims 30 to 36, characterized in that the sound protection hood (226) adjoining the sleeve (208) overlaps the sleeve (208) in a predetermined, preferably widened region (230), this region (230) being designed, in particular, as a collar of essentially L-shaped cross-section.

38. Device according to Claim 37, characterized in that the region (230) is designed to be widened in comparison with the remaining part of the sound protection hood (226) and/or engages over the sleeve (208) over a predetermined length (244).

39. Device according to Claim 38, characterized in that the length (244) is between 2 cm and 4 cm and is preferably essentially 3 cm.

40. Device according to one of Claims 30 to 39, characterized in that the sound protection hood (226) is composed of at least two parts which are connected to one another, in particular, by means of an adhesive tape or by means of an adhesive bond.

## Revendications

1. Dispositif pour le cloisonnement de tuyaux traversant des parois ou des plafonds, présentant
- au moins une garniture tubulaire (16, 76) conçue pour être respectivement mise en place sur une paroi ou un plafond (10, 41) et revêtue, sur sa face interne, d'un matériau expansible (34) à l'épreuve du feu, pouvant se dilater vers l'intérieur sous l'effet de la chaleur,
caractérisé par le fait
- qu'un matériau d'insonorisation (36, 38) se trouve sur la face interne de la garniture (16, 50, 76, 208).

2. Dispositif selon la revendication 1,
caractérisé par le fait que
le matériau d'insonorisation (36, 38) est également isolant contre les gaz de fumée.

3. Dispositif selon la revendication 1 ou 2,
caractérisé par le fait que
le matériau isolant (36, 38) se trouve sur la face interne du matériau expansible (34).

4. Dispositif selon l'une des revendications précédentes,
caractérisé par le fait que
le matériau isolant (36, 38) se présente comme une nappe de matériau.

5. Dispositif selon l'une des revendications précédentes,
caractérisé par le fait que
le matériau isolant est un matériau souple en un mat de fibres de verre et/ou en mousse et/ou en une substance du type caoutchouc.

6. Dispositif selon l'une des revendications précédentes,
caractérisé par le fait que
le matériau d'insonorisation est réalisé sous la forme d'une garniture d'étanchement à flexibles ou à lèvres.

7. Dispositif selon l'une des revendications précédentes,
caractérisé par le fait que
le matériau isolant renferme des rubans d'étoupage de joints qui sont précomprimés, sont doués d'élasticité permanente, et dont la compression préalable peut être supprimée.

8. Dispositif selon l'une des revendications précédentes,
caractérisé par le fait que
le matériau expansible (34) et le matériau isolant (36) sont fixés l'un à l'autre, de préférence cramponnés l'un sur l'autre.

9. Dispositif selon l'une des revendications précédentes,
caractérisé par le fait que,
à l'état non intégré de la garniture (16), le matériau isolant (36, 38) est fermement retenu de manière imperdable sur ladite garniture (16, 50, 76).

10. Dispositif selon l'une des revendications précédentes,
caractérisé par le fait que
la garniture (16, 76) peut être assemblée à partir de plusieurs segments (18, 20).

11. Dispositif selon la revendication 10,
caractérisé par le fait que
la garniture tubulaire (16, 76) ou, respectivement, au moins l'un de ses segments (18, 20) consiste, respectivement, en une douille ou en une partie du type douille à l'une des faces extrêmes de laquelle se trouve un épaulement (24) accusant, au moins par zones, une saillie rentrante.

12. Dispositif selon la revendication 10,
caractérisé par le fait que
les multiples segments (18, 20) d'une garniture (16, 76) peuvent être fixés (30, 33) les uns aux autres.

13. Dispositif selon la revendication 11,
caractérisé par le fait que
des nervures (30, 32) font saillie, sur la face externe des parties du type douille, de façon telle que plusieurs parties du type douille puissent être assemblées rigidement en un corps de douille.

14. Dispositif selon la revendication 13,
caractérisé par le fait que
des nervures (30, 32) peuvent être boulonnées les unes aux autres et l'écrou (31), prévu au minimum pour le boulonnage, est déjà soudé par points ou fixé, d'une manière similaire, sur la face externe d'une nervure (32).

15. Dispositif selon la revendication 11,
caractérisé par le fait
qu'un épaulement (26) saillant vers l'extérieur se trouve, au moins par zones, sur l'autre face extrême libre respective de la douille ou de la partie du type douille, épaulement au moyen duquel cette douille ou cette partie du type douille peut être respectivement fixée (29) à la paroi (41) ou au plafond (10) devant être cloisonné(e).

16. Dispositif selon l'une des revendications précédentes,
caractérisé par le fait que,
dans la région de la perforation (12, 42) respectivement pratiquée dans la paroi ou dans le plafond, une couche de matériau insonorisant (38, 83) se trouve sur la face externe du tuyau (14) traversant cette perforation.

17. Dispositif selon la revendication 16,
caractérisé par le fait que
cette couche de matériau insonorisant (38) est présente, au moins partiellement, sur la face interne d'une douille (50, 52, 54) du type garniture.

18. Dispositif selon la revendication 17,
caractérisé par le fait que
cette couche de matériau insonorisant (38) se présente, au moins partiellement, à la manière d'une ceinture.

19. Dispositif selon la revendication 17,
caractérisé par le fait que
cette douille (50, 52, 54) est réalisée avec faculté de pivotement (56) le long de l'une de ses génératrices (58), de telle sorte qu'elle puisse être mise en place, à l'état ouvert par pivotement, autour du tuyau (14) traversant la perforation.

20. Dispositif selon l'une des revendications précédentes,
caractérisé par le fait
qu'une garniture tubulaire (77) ou les segments de cette dernière, devant être disposés à l'extérieur de la perforation respectivement pratiquée dans la paroi ou le plafond, et une douille (80) ou des parties du type douille, matérialisant une garniture et devant être disposée(s) à l'intérieur de ladite perforation, peuvent être fixé(e)s les un(e)s aux autres ou sont relié(e)s (76) les un(e)s aux autres d'un seul tenant.

21. Dispositif selon la revendication 20,
caractérisé par le fait
qu'un épaulement (78), saillant vers l'intérieur au moins par zones, se trouve entre la garniture tubulaire et la douille du type garniture.

22. Dispositif selon la revendication 21,
caractérisé par le fait que
cet épaulement (78) saillant vers l'intérieur se trouve, respectivement, a la hauteur de la face externe de la paroi ou de la face inférieure du plafond.

23. Dispositif selon la revendication 20,
caractérisé par le fait que,
dans le cas d'une perforation du plafond parcourue, par le tuyau, selon une allure coudée, la zone d'aboutement de la garniture et de la douille du type garniture se trouve dans la région de ladite perforation.

24. Dispositif selon la revendication 23,
caractérisé par le fait que
la garniture et la douille du type garniture sont fixées obliquement l'une à l'autre dans la région de leur zone d'aboutement.

25. Dispositif selon l'une des revendications précédentes,
caractérisé par le fait que
la face externe des régions de la garniture qui viennent, respectivement, au contact de parties de la paroi ou du plafond, est rendue rugueuse ou est réalisée de manière à adhérer à du béton et/ou à du mortier.

26. Dispositif selon l'une des revendications précédentes,
caractérisé par le fait que
des organes d'espacement (94, 114) peuvent être implantés, de manière libérable, à la face extrême libre respective de la garniture ou de la douille du type garniture, de sorte que la distance accrue entre le tuyau et la garniture, conditionnée par le matériau insonorisant (36, 38), peut être fermement établie de manière immuable.

27. Dispositif selon la revendication 26,
caractérisé par le fait que
des zones de rupture programmée (110, 122) sont ménagées sur l'organe d'espacement (94, 114), de telle sorte que des espaces libres différemment grands puissent être fermement établis entre le tuyau et la garniture.

28. Dispositif selon l'une des revendications précédentes,
caractérisé par le fait que
le tuyau (14) ceinturé par la garniture tubulaire (16, 50, 76) est un tuyau d'insonorisation.

29. Dispositif selon la revendication 28,
caractérisé par le fait que
le tuyau d'insonorisation possède une enveloppe tubulaire à deux couches (14.1, 14.2).

30. Dispositif selon l'une des revendications précédentes,
caractérisé par le fait
qu'une hotte protectrice, notamment réalisée sous la forme d'une coiffe d'insonorisation (226) et prévue dans la région d'une perforation (204) du plafond, au-dessus d'une garniture (208), ceinture, au moins dans la région de ladite perforation (204), le tuyau (14, 14.1, 14.2) traversant ladite perforation (204).

31. Dispositif selon la revendication 30,
caractérisé par le fait
qu'un manchon (207), préférentiellement réalisé sous la forme d'un manchon double, est prévu à l'intérieur de la garniture (208) et/ou de la coiffe d'insonorisation (226), en vue de relier deux tuyaux (14.1, 14.2).

32. Dispositif selon la revendication 31,
caractérisé par le fait que
le manchon (207) comprend au moins deux moulures (238) et au moins quatre moulures (238) dans une réalisation en tant que manchon double, une bague (239) en un matériau élastique étant logée, dans la moulure considérée (238), de manière qu'un contact direct soit interdit entre le tuyau (14.1, 14.2) et le manchon (207).

33. Dispositif selon l'une des revendications 31 à 32,
caractérisé par le fait que
la garniture (208) présente une couche (218) en un matériau expansible, dont le diamètre intérieur (219) est égal ou supérieur au diamètre extérieur du manchon (207) et/ou de la moulure (238) de ce dernier.

34. Dispositif selon l'une des revendications 31 a 33,
caractérisé par le fait que
le diamètre intérieur (242) de la coiffe d'insonorisation (226) est au moins égal ou supérieur au diamètre extérieur du manchon (207) et/ou de la moulure (238) de ce dernier.

35. Dispositif selon l'une des revendications 33 à 34,
caractérisé par le fait que
le diamètre intérieur (242) de la coiffe d'insonorisation (226) est, pour l'essentiel, égal au diamètre intérieur (219) de la couche (218) en un matériau expansible équipant la garniture (208).

36. Dispositif selon l'une des revendications 30 à 35,
caractérisé par le fait que
la coiffe d'insonorisation (226) présente, à son extrémité tournée à l'opposé de la garniture (208), un bord (232) notamment supérieur qui se trouve à une distance préétablie (234) par rapport à un bord supérieur (236) du plafond (206).

37. Dispositif selon l'une des revendications 30 à 36,
caractérisé par le fait que
la coiffe d'insonorisation (226), prévue dans la continuité directe de la garniture (208), chevauche ladite garniture (208) dans une zone préétablie (230) préférentiellement élargie, cette zone (230) étant notamment réalisée sous la forme d'une collerette de section transversale sensiblement configurée en L.

38. Dispositif selon la revendication 37,
caractérisé par le fait que
la zone (230) est de réalisation élargie comparativement à la partie restante de la coiffe d'insonorisation (226), et/ou couronne la garniture (208) sur une longueur préétablie (244).

39. Dispositif selon la revendication 38,
caractérisé par le fait que
la longueur (244) est comprise entre 2 cm et 4 cm et mesure, de préférence, 3 cm pour l'essentiel.

40. Dispositif selon l'une des revendications 30 à 39,
caractérisé par le fait que
la coiffe d'insonorisation (226) est composée d'au moins deux parties qui sont, en particulier, reliées l'une à l'autre a moyen d'un ruban adhésif ou au moyen d'une solidarisation pa collage.
